# EUROPEAN PATENT SPECIFICATION

(11) **EP 2 066 554 B1**
(45) Date of publication and mention of the grant of the patent: **07.12.2011**
(21) Application number: 06805716.5
(22) Date of filing: 14.09.2006
(51) Int. Cl.: B63B 35/79

(54) **STEERING UNIT FOR FREE FLYING, CONFINED WING ELEMENT**
LENKEINHEIT FÜR FREI FLIEGENDES, EINGESCHRÄNKTES FLÜGELELEMENT
UNITÉ DE PILOTAGE POUR ÉLÉMENT D'AILE ATTACHÉ À VOL LIBRE

(43) Date of publication of application: 10.06.2009
(73) Proprietor: Skysails GmbH, 21079 Hamburg (DE)
(72) Inventor: WRAGE Stephan, 21079 Hamburg (DE); BRABECK Stephan, 21079 Hamburg (DE)
(74) Representative: Eisenführ, Speiser & Partner
(86) International application number: PCT/EP2006/008959
(87) International publication number: WO 2008/031446

(56) References cited:
- WO-A-2005/100147
- DE-A1-102004 054 097
- DE-U1-202004 013 841

## Description

The invention relates to a steering unit for a wind propulsion system, the steering unit comprising a first fixed attachment means for securing a first end of a tractive cable the second end of which is secured to a device or a vehicle to which a tractive force shall be transferred, a second attachment means for attaching a first end of a number of tractive lines, the second end of which being secured to an aerodynamic wing element. A mechanical support frame connects the first attachment means to the second attachment means to transfer a tractive force. A further aspect of the invention is an aerodynamic wind propulsion system comprising such a steering unit. Still further, the invention relates to a method of controlling such an aerodynamic wind propulsion system.

A wind propulsion system according to the invention basically comprises an aerodynamic wing element which is connected to a steering unit in close proximity to the wing element via a number of tractive lines. The steering unit itself is connected via a single tractive cable to a vehicle or an energy converter, to which the tractive force generated by the aerodynamic wing element shall be transferred.

Examples of such wind propulsion systems are disclosed in WO2005/100150 and W02005/100147.

In order to broaden the field of application and the efficiency of such wind propulsion systems it is generally desired, to enlarge the size of the aerodynamic wing element. When aiming to provide an efficient wind propulsion system which may for example be used to tow cargo ships it is necessary that the aerodynamic wing element, such as a kite, has an area of 160 to 5000m². A general problem associated with such large scale wing elements is the control of their flight. Moreover, since it is desired that the wing element flies at a high altitude in order to use the increased wind speed present there, it is not efficient to connect the wing element to the ground attachment point via more than one tractive line since this would increase the weight of the attachment means. Thus, it is necessary to connect the wing element via a number of tractive lines to a gondola which is arranged close to the wing element, whereas the gondola itself is connected to a base attachment point on the ground or a vessel via one single tractive cable.

When selecting such an arrangement for the wind propulsion system, a first problem is the way of steering the direction and the speed of the wing element with the associated gondola. It is an object of the invention to provide a steering unit for such a gondola which is capable to improve the steering behavior of the system.

A further problem associated with such arrangement is the weight of the gondola. Generally, it is desired to minimise the weight since (i) the weight of the gondola has to be carried by the wing element thus decreasing the tractive force transferred to the base attachment point and (ii) a larger mass of inertia affects the maneuverability of the wing element negatively. However, forces which have to be transmitted by the gondola are rather high withstanding a dimensional reduction of the support structures within the gondola. It is an object of the invention to provide a steering unit for such a gondola which has an optimized weight in relation to its capability of transferring tractive forces.

Still further, it is generally necessary to control the flight parameters of the wing element from a base control unit which is arranged in close proximity of the base attachment point. Usually, this requires transmission of control signals from the base control unit to the steering unit in the gondola in order to control an actuator in the steering unit. A general problem associated with such a set-up is the risk that the wing element might become uncontrollable if the transmission of the control signals is interrupted. It is a further object of the invention to provide a wind propulsion system which is capable of reducing or even eliminating this risk.

According to a first aspect of the invention, a steering unit as mentioned above is provided, wherein the second attachment means comprise at least one upper fixed attachment point, a left moveable attachment point, a right moveable attachment point, and steering actuator means for varying the distance between the upper fixed attachment point and the left moveable attachment point and for varying the distance between the upper fixed attachment point and the right moveable attachment point.

The steering unit according to the invention provides a sophisticated set-up for steering an aerodynamic wing element attached thereto. The basic concept of the steering unit relies on the provision of a fixed, a right moveable and a left moveable attachment point for attaching thereto the tractive lines attached to the aerodynamic wing element. According to the invention, the upper fixed attachment point or a plurality of such upper fixed attachment points are connected to tractive lines which are attached to a central part of the aerodynamic wing element. The left moveable attachment point is arranged to be attached to those tractive lines which are attached to a left-side part of the aerodynamic wing element and the right moveable attachment point is arranged to be arranged to tractive lines attached to a right-side part of the aerodynamic wing element, respectively.

Thus, by shortening the distance between one of the moveable attachment points and the upper fixed attachment point and selectively additionally extending the distance between the other moveable attachment point and the upper fixed attachment point, the geometric shape of the aerodynamic wing element can be altered in order to change the flight direction of the wing element. In particular, the geometric shape of the aerodynamic wing element can be altered from a symmetrical shape, wherein the two moveable attachment points are arranged at a similar distance from an upper fixed attachment point, to an unsymmetrical shape, wherein the aerodynamic wing element is bent on one side in the direction towards the steering unit and selectively additionally bent on the other side in a direction away from the steering unit.

Preferably, the aerodynamic wing element has a cross-sectional shape which is bent as this is known from prior art kites and the curvature of this bending is varied by moving the moveable attachment points.

According to the invention, the moveable attachment points may be arranged outside the mechanical support frame of the steering unit. However, the point of load incident for transferring the tractive forces of the tractive lines attached to the moveable attachment points is preferably arranged within the support frame.

According to a first preferred embodiment, the steering actuator means comprise an actuator for selectively driving a belt in alternative directions, the first end of the belt providing the left moveable attachment point and the second end of the belt providing the right moveable attachment point. With this preferred embodiment, a simultaneous movement of the left and the right moveable attachment point is achieved when driving the belt in one direction. In detail, the distance between an upper fixed attachment point and one of the moveable attachment points is increased whereas the distance to the other one of the attachment points is decreased.

This embodiment may be further improved in that the steering actuator means comprise a driven wheel rotatably fixed to the mechanical support frame and a belt, which is at least partially wound around the wheel, the first end of the belt providing the left moveable attachment point and the second end of the belt, providing the right moveable attachment point. According to this preferred embodiment, the driven wheel serves as point of load incident for the tractive forces acting on the moveable attachment points and these tractive forces are transmitted via rotational bearings of the wheel into the mechanical support frame. The wheel may be driven by an electric motor whose speed of rotation is preferably transferred via a reduction gear to the wheel, thereby enhancing the torque acting on the wheel. The reduction gear may be selected from a planetary gear, a harmonic drive gear, a sumitomo gear or a spinea gear.

Other solutions for actuating the driven wheel may be realized, e.g. a lever connected to the wheel and being eccentrically actuated by a linear actuator.

In particular, it is preferred that the driven wheel is a toothed wheel and the belt is toothed to be matingly received by the wheel. This assures a safe transmission of the rotation of the wheel into a movement of the moveable attachment points.

According to an alternative solution, the steering actuator means comprise a first actuator attached to the support frame and adapted for varying the distance between the upper fixed attachment point and the left moveable attachment point and a second actuator attached to the support frame and adapted for varying the distance between the upper fixed attachment point and the right moveable attachment point. The first and second actuator may be a pneumatic or hydraulic cylinder which first end is attached to the support frame and which second end provides the left and the right moveable attachment point, respectively.

According to another preferred embodiment, the support frame comprises at least one, preferably two or more support plates.

Further, the support frame may preferably comprise two or more support plates arranged at a distance from each other and sandwiching the at least one upper fixed attachment point and the first attachment means. With this embodiment, a structure of the support frame is realized which allows for a light-weight construction and safe transmission of the tractive forces acting onto the support frame. The support plates may be manufactured from appropriate materials like light-metal alloys, fiber-reinforced polymers or the like. In particular, the two support plates may extend from the first attachment means to the upper fixed attachment point(s).

According to a further preferred embodiment, the points of load incidence of the first fixed attachment means and the second attachment means are connected by tensional fiber rovings for transferring the tractive forces. This preferred embodiment relies on the conclusion, that the main forces acting between the first fixed attachment means and the second attachment means are tensional forces and thus, a light-weight structure of the steering unit may preferably be realized by connecting these attachment means with a structure which is particularly adapted for transmitting such tensional forces. According to the preferred embodiment, fiber rovings are used for transferring the tractive forces. The fiber rovings may be selected from glass fibers, carbon fibers, and other fibers well suited for the intended purpose. According to the embodiment, a number of fibers is used to provide a roving. The fibers may be arranged parallel in the roving and may have a kind of connection to each other, e.g. by a matrix material or a mechanical interaction like a twisting, interlacing or interweaving of the fibers.

Further, it is preferred that the support frame comprises at least two support plates arranged at a distance from each other and the first fixed attachment means and the upper fixed attachment point are rigid rods extending from one of the support plates to the other and being connected by tensional fiber rovings for transferring the tractive forces. This embodiment is particularly preferred because it allows for a light-weight structure of the steering unit without giving up relevant mechnical properties of the unit. According to this embodiment, the tensional fiber rovings might be integrated into the support plates or might be arranged at a distance from the support plates. The rods are preferably structurally secured within the support plates whereas the tractional forces between the rods are transferred mainly via the fiber rovings, thus avoiding heavy loads acting on the support plates in case of a separate arrangement of the fiber rovings from these plates.

In particular, it is preferred that the tensional rovings comprise a first set of fiber rovings adjacent to a first one of the support plates and a second set of rovings adjacent to the other one of the support plates. By this, the rods are secured close to their ends fixed within the support plates by the set of fiber roving and thus, a sandwich construction is realized, wherein the middle part of the rods may serve as attachment point and the end regions of the rods are circumscribed by the fiber rovings for transmitting the tractive forces and fixed within the support plates for defining the geometrical arrangement.

Finally, the fixation of the attachment points and attachment means can be further improved in that a left and a right upper fixed attachment point are provided and these upper fixed attachment points and the first attachment means are cylindrical rods extending from a first support plate to a second support plate arranged parallel to the first support plate and wherein the cylindrical rods are connected by tensional rovings which are at least partially wound around the rods and which comprise a first fiber roving extending from the rod for the left second fixed attachment point to the rod of the first attachment means, a second fiber roving extending from the rod for the right second fixed attachment point to the rod of the first attachment means, a third fiber roving extending from a point of load incidence for the moveable attachment points to the rod of the first attachment means for transferring the tractive forces. This set-up of the steering unit provides a total of five attachment points, wherein two of the attachment points for the tractive lines are moveable and arranged on the sides of the steering unit and two attachment points for the tractive lines are fixed and arranged in a central part with respect to the moveable attachment points. The moveable attachment point transfers the tractive forces to at least one point of load incident which is attached to the support plates. By this, a total of at least four attachment points is provided within the steering unit and the tractive forces of the two fixed attachment points and the point of load incident are transferred to the first attachment means. According to the embodiment, this transfer of tractive forces is achieved via separate fiber rovings extending from each of the attachment points or point of load incident, respectively, to the first attachment means. It is important to notice that the three fiber roving may be provided by one single fiber roving which is wound around the rods to provide for single fiber rovings extending between the single rods and the attachment means. Additional fiber rovings may be provided between single rods to improve the stiffness of the whole structure.

According to another preferred embodiment at least one of the moveable attachment points and/or the first attachment means is coupled to the support frame via a load measurement cell. This embodiment allows to detect the tractive forces acting via the respective tractive lines onto the moveable attachment points and/or the tractive forces acting via the first attachment means onto the tractive cable. It is of particular advantage to detect these forces close to the steering unit because this allows calculation of certain flight conditions of the aerodynamic wing element and thus be of high relevance for controlling the flight. Another advantage of this preferred embodiment is the arrangement of the sensor signals within the steering unit. By this, it is not necessary to transmit such sensor signals or respectively calculated values to the steering unit via a signal line or other transmission means, thus avoiding the risk of interruption of the transmission.

The steering unit as described previously or in the introductory portion may be further improved by providing additional moveable attachment means for controlling the lifting force of the aerodynamic wing element are provided which are to be coupled to at least one tractive line attached to the aerodynamic wing element in a region between its leading edge and its trailing edge. Such additional moveable attachment means may be arranged besides the right and left moveable attachment means and serve to control the lifting force of the wing element during the flight. Since a reduced lifting force will usually result in an increase of angle of attack of the wing element, i.e. a lift of the leading edge in relation to the trailing edge, such lifting force control lines may be used for inclination control as well.

The additional moveable attachment means for controlling lifting force of the aerodynamic wing element may preferably comprise a left moveable attachment means and a right moveable attachment means which are to be coupled to at least one tractive line attached to a left region and a right region of the aerodynamic wing element, respectively, in a region between its leading edge and its trailing edge. This allows the individual control of the lifting force in the left and the right wing part of the wing element and thus may be used to improve maneuverability and/or to twist the wing element as a consequence of the change of individual angle of attack.

According to another aspect of the invention, the steering unit as mentioned above or described in the introductory portion of this description may be further improved in that the steering unit comprises an energy storage, a sensor for detecting the orientation and/or rate of turn of the steering unit, the position of the steering unit and/or at least one flight parameter of the steering unit, and a controller for controlling the flight direction of an aerodynamic wing element attached to the steering unit, the controller being connected to the sensor(s) and the energy storage and being capable of controlling an actuator for changing the flight direction of the aerodynamic wing element based on the sensor signals. With a such equipped steering unit it is possible to provide an improved control of the aerodynamic wing element wherein at least a part of the process steps required for calculating the controller signals for the actuator are performed within the steering unit thus avoiding the need to transfer large amounts of signals to a main controller unit arranged at a ground station and vice versa.

This preferred embodiment can be further improved in that the controller is capable of controlling the actuator for changing the flight direction of the aerodynamic wing element without input from outside the steering unit. In particular when controlling large scale wing elements using the steering unit according to the invention it is important to ensure that even in the case of failure, wherein the transmission of signals from a ground control station to the steering unit is interrupted or disordered, some basic control functions can be maintained by the steering unit without input from outside, e.g. from the ground control station. Thus, the concept of this improvement is to provide a certain amount of self-sufficiency of the steering unit in order to allow for an autarkic control of the aerodynamic wing element by the steering unit for at least a certain time period in case that breakdown of energy transfer and/or signal transmission between the ground station and the steering unit occurs. The controller of the steering unit can thus switch into an emergency failure mode wherein it is at least avoided that the aerodynamic wing element becomes uncontrollable.

It is further preferred that the energy storage comprises an electric, preferably rechargeable battery, a capacitor and/or an air accumulator. These energy storages are particularly well-suited for storing energy with low weight-components and for providing the energy in the form required for the actuating drive.

Thereby it is further preferred that the controller comprises a logic unit programmed for controlling the actuator in such a way, that the aerodynamic wing element is always kept above a minimum altitude. This will allow to safely maintain a certain altitude of the aerodynamic wing element and might even make it possible to control the aerodynamic wing element in such a way that the same or only slightly diminished operability is achieved, thus further providing significant tractive forces in the tractive cable to provide significant energy transfer to the ground station.

The logic unit may preferably be programmed for keeping the aerodynamic wing element at a fixed altitude or within a fixed altitude range, for directing the aerodynamic wing element along a predetermined closed loop flight path, and/or for keeping the aerodynamic wing element along a straight flight path extending horizontally. The logic unit may be programmed only according to one of these alternatives or two or all of these alternatives may be programmed so that, depending on flight conditions an appropriate emergency program may be selected which fits the present situation. In particular when the steering unit is used to control an aerodynamic wind propulsion system for towing watercraft the flight along a straight flight path may be preferred in order to allow for continuous operation and traction of the wind propulsion system. In this case, the straight flight path will preferably correspond to the course of the watercraft before the emergency situation arose and the position of the aerodynamic wind element is adjusted for minimal force in the towing line and minimal steering force: this position will normally be the zenith position.

It is further preferred, that the controller is connected to at least one sensor detecting an angular position of the steering unit in relation to the direction of gravity and is programmed to maintain a fixed angular orientation or an angular orientation range or a programmed sequence of angular orientations in at least one plane, preferably more planes and in particular three planes oriented orthogonal to each other in relation to the direction of gravity. This preferred embodiment uses a typical property of aerodynamic wing elements like kites, namely that in case of wind directions oriented in a perpendicular plane to the direction of gravity (i.e. horizontal) the flight direction and the direction of the tractive forces exerted by the wing element can be controlled by keeping the wing element in a certain angular orientation with respect to the direction of gravity. This can be achieved by adjusting a respective angular orientation of the steering unit with respect to the direction of gravity. Thus, the controller may preferably be programmed to maintain an angular position or an angular position range with respect to the direction of gravity. This will usually result in a more or less fixed position of the steering unit and the wing element, respectively, with respect to the ground station. In an improved version of this controller a programmed sequence of angular orientations is adjusted consecutively. This allows the aerodynamic wing element to be directed into a certain preferred position and could further be used to direct the aerodynamic wing element along a closed loop flight path like a circle, an ellipsoid or a flight path in the form of a lying eight. Controlling such a sequence of orientations will often provide a safer control of the flight of the wing element because such control is less sensitive to momentary changes of wind speed and wind direction.

It is further preferred that the controller is connected to three gyroscope sensors arranged in three directions orthogonal to each other and three linear acceleration sensors arranged in three directions orthogonal to each other and is programmed to calculate an estimation of the direction of gravity from the signals of these sensors. This embodiment allows a rather precise determination of the direction of gravity even in a steering unit which is exposed permanently changing accelerations.

According to a further aspect of the invention a steering unit as previously described or a steering unit as described in the introduction of the description may be further improved in that the controller is connected to a load cell coupled between the support frame and the first attachment means for measuring the tractive force of the aerodynamic wing element, a load cell coupled between the support frame and the left moveable attachment points for measuring the left steering force, a load cell coupled between the support frame and the right moveable attachment points for measuring the right steering force, a GPS position finder, and/or an anemometer.

This preferred embodiment provides at least one and preferably five important input parameters for controlling the flight of the aerodynamic wing element from within the steering unit without the need to transmit respective sensor signals from outside to the steering unit. This will improve self-sustaining operation of the steering unit in case of temporary breakdown of such signal transmission. In particular, it is preferred that at least two of the load cells and the anemometer are provided to ensure basic control of the aerodynamic wing element.

The invention may further be embodied in an aerodynamic wind propulsion systems, comprising an aerodynamic wing connected via a number of tractive lines attached to the wing at a plurality of attachments points distanced along the width of the wing to a steering unit as described before, wherein a number of most left tractive lines are combined and connected to the left moveable attachment point, a number of central left tractive lines are combined and connected to the left fixed attachment point, a number of central right tractive lines are combined and connected to the right fixed attachment point, and a number of most right tractive lines are combined and connected to the right moveable attachment point.

Such wind propulsion system comprises a steering unit which is integrated in the system and connected to the aerodynamic wing element to provide for the functions of the steering unit as previously described.

The aerodynamic wind propulsion system may be further improved in that the steering unit comprises additional moveable attachment means for controlling lifting force of the aerodynamic wing element which are coupled to at least one, preferably a number of tractive lifting force control lines attached to the aerodynamic wing element in a region between its leading edge and its trailing edge. Such tractive lifting force control lines allow changing the aerodynamic profile of the aerodynamic wing element. By this, the aerodynamic profile may be changed to a less effective profile producing less lifting force, e.g. by pulling the tractive lifting force control lines and thus inducing a downward curvature in the aerodynamic wing element in the region of their attachment points. Such decrease of lifting force will usually result in an increase of the angle of attack of the aerodynamic wing element, i.e. the aerodynamic wing element will lower its trailing edge and lift its leading edge. Viceversa, the lifting force may be increased again by slacking the lifting force control lines and thus restoring the optimum aerodynamic profile for maximum lifting force and restoring horizontal flight attitude of the wing element. Such control of lifting force may be used to lower the lifting force and thus decrease responsiveness of the wing element to interference or changes of wind direction and speed during the starting or landing maneuver.

Preferably, the at least one tractive lifting force control line is attached to the aerodynamic wing element in a distance of one quarter of the length of the aerodynamic wing element behind the leading edge. The region adjacent to one quarter in lengthwise direction behind the leading edge has shown to be most effective for changing lifting force and thus the lifting force control lines are preferably attached in this region.

Further, a number of tractive lifting force control lines are attached to the aerodynamic wing element along its widthwise central region. This improvement provides a reasonable reduction of the number of tractive lifting force control lines. It has been demonstrated that the central region of the aerodynamic wing element is most effective for controlling the lifting force, whereas the side regions have less influence on this. Thus, tractive lifting force control lines attached to the side regions may be omitted for ease of construction.

Still further, the additional moveable attachment means for controlling lifting force of the aerodynamic wing element may preferably comprise a left moveable attachment means and a right moveable attachment means which are coupled to at least one tractive line attached to a left region and one tractive line attached a right region of the aerodynamic wing element, respectively, in a region between its leading edge and its trailing edge. This will allow control of the lifting force of the aerodynamic wing element separately in the left and the right region and thus allow to control flight direction of the wing element and to twist the wing element around its lengthwise axis.

Further, the invention may be embodied in a watercraft connected via a tractive cable to the first attachment means of a steering unit of a wind propulsion system as described above. In this respect, reference is made to the international applications mentioned in the introduction of this description describing such systems for towing watercraft.

Preferred embodiments of the invention will be described with reference to the accompanying figures. In the figures,
Fig. 1 depicts a frontal view of an aerodynamic wing element with a steering unit according to the invention attached thereto,
Fig. 2 depicts a side view of the wing element and steering unit according to figure 1,
Fig. 3 depicts a detail of the steering unit having attached four tractive lines for connecting with the wing element and one tractive cable for connecting with a base station,
Fig. 4 depicts a schematic drawing of the points of load incident of the steering unit and their connection via tensional rovings, and
Fig. 5 depicts a schematic side view of the arrangement of the components within a steering unit according to the invention.

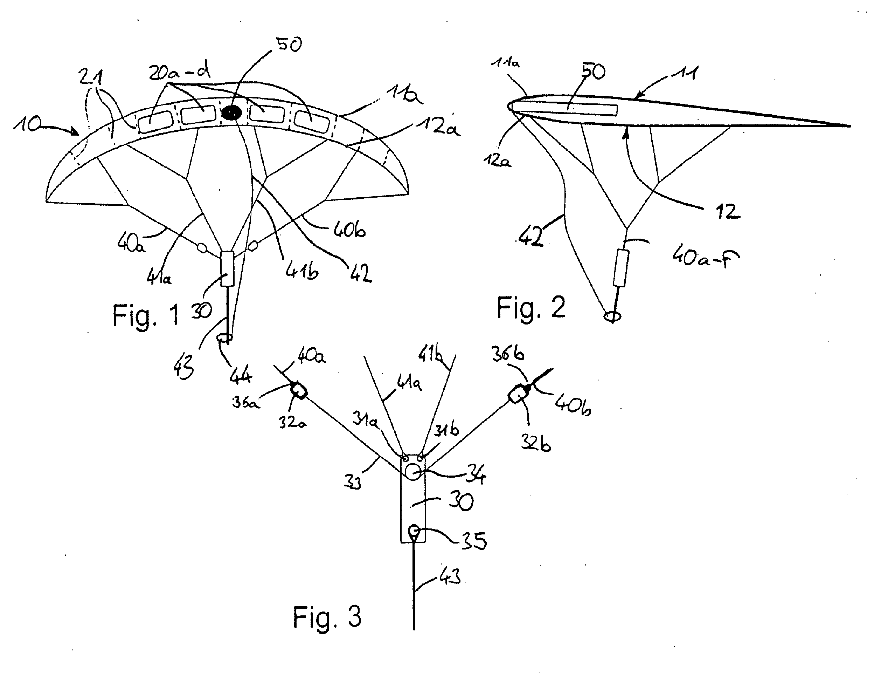

Referring to figures 1 and 2 an aerodynamic wing element according to the invention may be shaped like a kite 10 comprising an upper layer 11 and a lower layer 12. In the frontal view according to figure 1 four openings 20a-d are visible in the leading edge 11a, 12a. These openings ventilate the inner space between the upper and lower layer 11, 12. The openings are arranged beside the horizontal longitudinal axis of the kite. In the lateral area between the leading edges 11a, 12a no openings are present.

The upper and lower layer are connected via a plurality of ribs 21 shown in dashed lines in figure 1. The assembly of upper layer, lower layer and the plurality of ribs provides a flexible wing element. This wing element is attached to a steering unit 30 via a plurality of tractive lines. Basically, starting from a large number of lines attached to the wing element these lines are merged to a reduced number of lines in a plurality of merging steps (for the sake of clarity only one merging step of two such tractive lines into one common tractive line is shown in figure 1) and finally the plurality of tractive lines attached to the wing element is reduced to a total number of four tractive lines attached to the steering unit 30.

These four tractive lines consist of two steering tractive lines 40a, b and two fixed tractive lines 41a, b. As can be seen in the figure, the fixed tractive lines 41a, b are connected to the central region of the kite whereas the steering tractive lines 40a, b are connected to the two lateral regions of the kite, namely the left steering tractive line 40a to the left lateral region and the right steering tractive line 40b to the right lateral region.

As can be seen from figure 2, the wing element is attached to a number of tractive lines in its longitudinal direction in the same manner as shown in figure 1 for its width direction. The attachment points of the tractive lines are distributed along the wing element in its longitudinal direction and are merged to the final four tractive lines connected to the steering unit in the same way as previously described for those tractive lines distributed along the width direction of the wing element.

A rigid kite stick 50 is attached to the kite along its longitudinal middle axis between the upper and lower layer 11, 12. The kite stick 50 extends along approximately one third of the total length of the kite. A guiding line 42 is guided at the kite stick 50 serving for starting and docking manoeuvres of the kite.

A tractive cable 43 is attached to the steering unit 30 to connect the steering unit with a watercraft which is to be towed by the kite 10. The guiding line 42 is attached slidingly and detachable via a ring element 44 along the tractive cable 43.

As can be seen from the detailed view of figure 3, the steering unit 30 comprises two fixed upper attachment points 31 a, b at which the fixed tractive lines 41 a, b are attached to.

Each of the steering tractive lines 40a, b is coupled with a respective moveable attachment point 36a, b at a first end of load cells 32a, b. The second end of the load cells 32a, b is coupled with a gear belt 33, connecting the two load cells 32a, b. The gear belt 33 is wound around a gear wheel 34 within the steering unit 30 and thus deflected. Rotation of the gear wheel 34 will vary the distance between the moveable attachment points 36a, b at the load cells 32a, b and the gear wheel 34 or the upper fixed attachment points 31 a, b. By this, the curvature of the kite 10 can be changed in that the distance between a first one of the load cells 32a, b to the upper fixed attachment points 31a, b is increased and at the same time the distance of the other one of the load cells 32a, b to these upper fixed attachment points 31a, b is decreased. This will result in a change of flight direction of the kite.

The tractive cable 43 is attached to the steering unit at a third fixed attachment point 35.

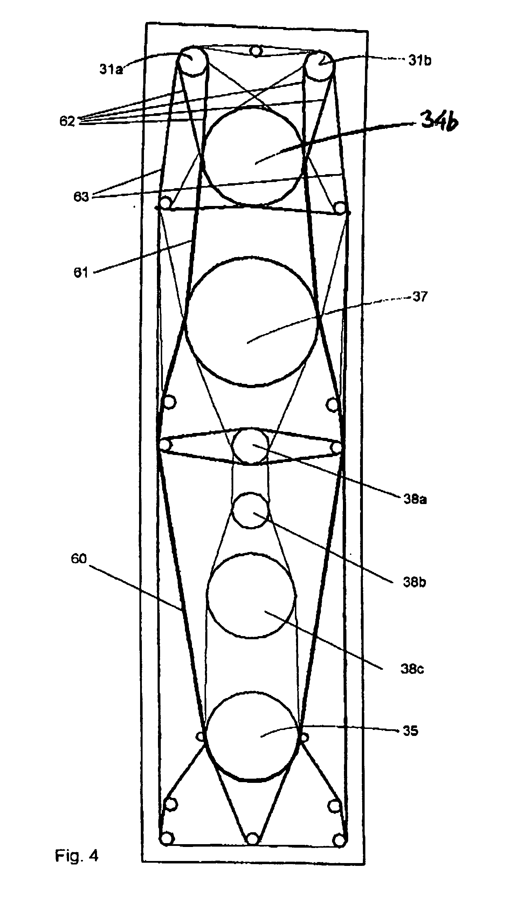

Referring to figure 4, the mechanical set-up for transferring the tractive forces from the upper fixed attachment points 31a, 31b, the support 34b for the gear wheel 34 to the lower fixed attachment point 35 is shown. Further, a recess provided by a tube 37 for placing therein a motor and a gear for actuating the gear wheel is provided between the gear wheel 34 and the lower fixed attachment point 36. Between the recess provided by the tube 37 and the lower fixed attachment point 35 there are a number of tubes providing recesses 38a-c for arranging power and data cables and an on/off switch therein are provided.

The points of load incidence and the attachment points are coupled via one fiber roving wound around them and being such divided in a plurality of sections.

A first main fiber roving section 60 is wound around the tube 37 and the lower fixed attachment point to provide a rigid and strong connection between them. A further main fiber roving section 61 is wound around the tube 37 and the support 34b for the gear wheel 34. Finally, a third main fiber roving section 62 is wound around the upper left fixed attachment point 31a, then wound around the support 34b and by this redirected to be wound around the upper right fixed attachment point 31 b.

Further, a number of strong fiber rovings sections 63 are provided to directly couple the upper left and right fixed attachment points 31a, b to the lower fixed attachment point.

For increasing stiffness of the whole mechanical set-up, a number of secondary fiber roving sections are wound around the tubes, attachment points and supports of the steering unit.

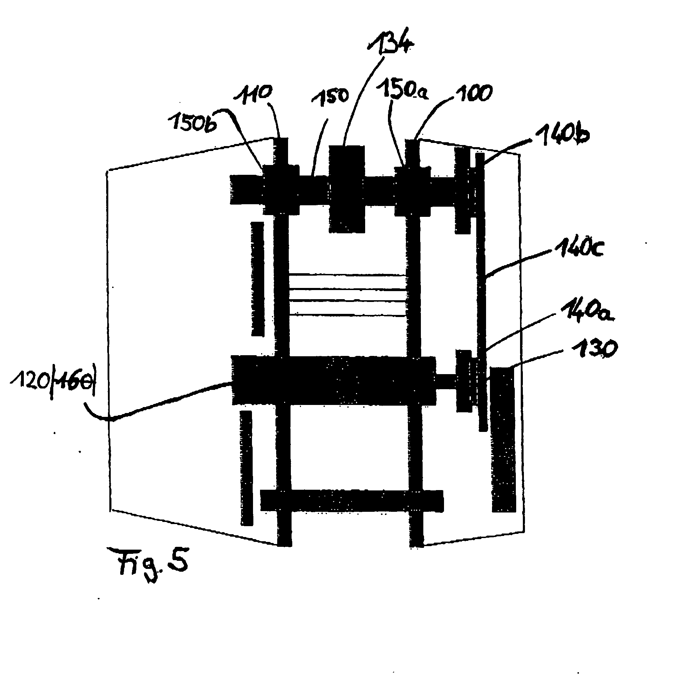

Referring now to figure 5, the set up of the steering unit is shown. The steering unit comprises a first support plate 100 and a second support plate 110. The first and the second support plate 100, 110 are arranged parallel to each other in a distance leaving enough space for arranging the fixed attachment points between them. An electric motor 120 is arranged with its longitudinal axis perpendicular to the plane of the support plates 100, 110 and extends through both support plates. The electric motor 120 is coupled with a reduction gear 130 and a further belt reduction gear 140a-c comprising a first gear wheel 140a, a second gear wheel 140b and a gear belt 140c connecting these two gear wheels 140a, b.

The second gear wheel 140b is mounted to a shaft 150 which is arranged parallel to the longitudinal axis of the electric motor 120 and is rotatably fixed within the two support plates 100, 110 via a first rotational bearing 150a and a second rotational bearing 150b, respectively.

Between the two rotational bearings 150a, b a gear wheel 134 is fixed to the shaft 150. The gear wheel matingly receives a gear belt (not shown) which carries the left and right moveable attachment points at its respective ends as shown in figure 3.

The steering unit shown in figure 5 further comprises a controller connected to the electric motor 120 to provide steering signals to the motor 120. Further, three gyroscope sensors arranged in three directions orthogonal to each other and three linear acceleration sensors arranged in three directions orthogonal to each other are integrated into the steering unit and connected to the controller to provide the controller with information about the present actual acceleration of the steering unit with respect to three orthogonal axis and three orthogonal directions.

The controller is adapted to calculate the direction of gravity from these sensor signals and to provide the electric motor 120 with steering signals to follow a preprogrammed sequence of angular orientations of the steering unit with respect to the direction of gravity.

## Claims

1. Steering unit for a wind propulsion system, the steering unit comprising
- a first fixed attachment means (35) for securing a first end of a tractive cable (43) the second end of which is secured to a device or a vehicle to which a tractive force shall be transferred,
- a second attachment means (31a, b, 36a, b, 33, 34) for attaching a number of tractive lines (40a, b, 41 a, b), the second end of which being secured to an aerodynamic wing element (11a, 12a, 21),
- a mechanical support frame (100,110) connecting the first attachment means to the second attachment means for transferring a tractive force,
**characterized in that** the second attachment means comprise
- at least one upper fixed attachment point (31 a, b),
- a left moveable attachment point (36a),
- a right moveable attachment point (36b), and
- steering actuator means (33, 34, 120, 130, 140a-c) for varying the distance between the upper fixed attachment point and the left moveable attachment point and for varying the distance between the upper fixed attachment point and the right moveable attachment point.

2. Steering unit according to the previous claim,
wherein the steering actuator means comprise an actuator (120, 34) for selectively driving a belt (33) in alternative directions, the first end of the belt providing the left moveable attachment point and the second end of the belt providing the right moveable attachment point.

3. Steering unit according to claim 1,
wherein the steering actuator means comprise a first actuator attached to the support frame (100, 110) and adapted for varying the distance between attachment point (31 a, b) and the left moveable attachment point (36 a) and a second actuator attached to the support frame and adapted for varying the distance between the upper fixed attachment point and the right moveable attachment point (36 b).

4. Steering unit according to any of the previous claims,
wherein the support frame comprises at least two support plates (100, 110) arranged at a distance from each other and sandwiching the at least one upper fixed attachment point and the first attachment means.

5. Steering unit according to any of the previous claims,
wherein the points of load incidence of the first fixed attachment means (35) and the second attachment means (31 a, b) are connected by tensional fiber rovings (60,61,62,63) for transferring the tractive forces.

6. Steering unit according to any of the previous claims,
wherein the support frame comprises at least two support plates (100, 110) arranged at a distance from each other and the first fixed attachment means and the second fixed attachment means comprise rigid rods (31 a, b, 35) extending from one of the support plates to the other and being connected by tensional fiber rovings for transferring the tractive forces.

7. Steering unit according to any of the previous claims,
wherein a left (31 a) and a right (31 b) upper fixed attachment point is provided and these upper fixed attachment points and the first attachment means are rods extending from a first support plate (100) to a second support plate (110) arranged parallel to the first support plate and wherein the cylindrical rods are connected by tensional rovings which are at least partially wound around the rods and which comprise
- a first fiber roving (62, 63) extending from the rod for the left second fixed attachment point to the rod of the first attachment means,
- a second fiber roving (62, 63) extending from the rod for the right second fixed attachment point to the rod of the first attachment means,
- a third fiber roving (60) extending from a point of load incidence for the moveable attachment points to the rod of the first attachment means
for transferring the tractive forces.

8. Steering unit according to any of the previous claims,
wherein at least one of the moveable attachment points and/or the first attachment means is coupled to the support frame via a load measurement cell (32 a, b)

9. Steering unit according to any of the previous claims,
wherein additional moveable attachment means (40 a - f) for controlling lifting force of the aerodynamic wing element are provided which are to be coupled to at least one tractive line attached to the aerodynamic wing element in a region between its leading edge and its trailing edge.

10. Steering unit according to the previous claim,
wherein the additional moveable attachment means for controlling lifting force of the aerodynamic wing element comprise a left moveable attachment means and a right moveable attachment means which are to be coupled to at least one tractive line attached to a left region and a right region of the aerodynamic wing element, respectively, in a region between its leading edge and its trailing edge.

11. Steering unit according to any of the previous claims,
**characterized in that** the steering unit comprises an energy storage, a sensor for detecting the orientation and/or rate of tum of the steering unit, the position of the steering unit and/or at least one flight parameter of the steering unit, and a controller (160) for controlling the flight direction of an aerodynamic wing element attached to the steering unit, the controller (160) being connected to the sensor(s) and the energy storage and being capable of controlling an actuator for changing the flight direction of the aerodynamic wing element based on the sensor signals.

12. An aerodynamic wind propulsion system, comprising an aerodynamic wing connected via a number of tractive lines attached to the wing at a plurality of attachments points distanced along the width of the wing to a steering unit according to any of the previous claims, wherein
- a number of most left tractive lines (40a) are combined and connected to the left moveable attachment point,
- a number of central left tractive lines (41 a) are combined and connected to the left fixed attachment point,
- a number of central right tractive lines (41 b) are combined and connected to the right fixed attachment point, and
- a number of most right tractive lines (40b) are combined and connected to the right moveable attachment point.

13. An aerodynamic wind propulsion system according to the previous claim, wherein the steering unit comprises additional moveable attachment means for controlling lifting force of the aerodynamic wing element which are coupled to at least one, preferably a number of tractive lifting force control lines attached to the aerodynamic wing element in a region between its leading edge and its trailing edge
wherein the additional moveable attachment means for controlling lifting force of the aerodynamic wing element comprise a left moveable attachment means and a right moveable attachment means which are to be coupled to at least one tractive line attached to a left region and a right region of the aerodynamic wing element, respectively, in a region between its leading edge and its trailing edge.

14. A watercraft connected via a tractive cable to a steering unit of a wind propulsion system according to one of claims 1-11.

## Patentansprüche

1. Lenkeinheit für ein Windantriebssystem, die Lenkeinheit umfassend:
- ein erstes feststehendes Befestigungsmittel (35) zum Sichern eines ersten Endes eines Zugkabels (43), dessen zweites Ende an einer Vorrichtung oder einem Fahrzeug gesichert ist, auf das eine Zugkraft übertragen werden soll,
- ein zweites Befestigungsmittel (31a, b, 36a, b, 33, 34) zum Befestigen von mehreren Zugleinen (40a, b, 41a, b), deren zweites Ende an einem aerodynamischen Flügelelement (11 a, 12a, 21) gesichert ist,
- ein mechanisches Gestell (100, 110), welches das erste Befestigungsmittel mit dem zweiten Befestigungsmittel zum Übertragen einer Zugkraft verbindet,
**dadurch gekennzeichnet, dass** das zweite Befestigungsmittel umfasst:
- wenigstens einen oberen feststehenden Befestigungspunkt (31a, b),
- einen linken bewegbaren Befestigungspunkt (36a),
- einen rechten bewegbaren Befestigungspunkt (36b), und
- Lenkaktuatormittel (33, 34, 120, 130, 140a-c) zum Variieren des Abstands zwischen dem oberen feststehenden Befestigungspunkt und dem linken bewegbaren Befestigungspunkt und zum Variieren des Abstands zwischen dem oberen feststehenden Befestigungspunkt und dem rechten bewegbaren Befestigungspunkt.

2. Lenkeinheit nach dem vorstehenden Anspruch,
wobei das Lenkaktuatormittel einen Aktuator (120, 34) umfasst zum wahlweisen Antreiben eines Gürtels (33) in alternativen Richtungen, wobei das erste Ende des Gürtels den linken bewegbaren Befestigungspunkt bereitstellt und das zweite Ende des Gürtels den rechten bewegbaren Befestigungspunkt bereitstellt.

3. Lenkeinheit nach Anspruch 1,
wobei das Lenkaktuatormittel einen ersten Aktuator, welcher an dem Gestell (100, 110) befestigt ist und zum Variieren des Abstands zwischen dem Befestigungspunkt (31a, b) und dem linken bewegbaren Befestigungspunkt (36a) ausgebildet ist, und einen zweiten Aktuator, welcher an dem ersten Gestell befestigt ist und zum Variieren des Abstands zwischen dem oberen feststehenden Befestigungspunkt und dem rechten bewegbaren Befestigungspunkt (36b) ausgebildet ist, umfasst.

4. Lenkeinheit nach einem der vorstehenden Ansprüche,
wobei das Gestell wenigstens zwei Stützplatten (100, 110) umfasst, welche in einem Abstand voneinander angeordnet sind und wenigstens einen oberen feststehenden Befestigungspunkt und ein erstes Befestigungsmittel sandwichartig einhüllen.

5. Lenkeinheit nach einem der vorstehenden Ansprüche,
wobei die Kraftangriffspunkte des ersten feststehenden Befestigungsmittels (35) und des zweiten Befestigungsmittels (31a, b) mittels gespannter Faserrovings (60, 61, 62, 63) zum Übertragen der Zugkräfte verbunden sind.

6. Lenkeinheit nach einem der vorstehenden Ansprüche,
wobei das Gestell wenigstens zwei Stützplatten (100, 110) umfasst, welche in einem Abstand zueinander angeordnet sind, und das erste feststehende Befestigungsmittel und das zweite feststehende Befestigungsmittel starre Stäbe (31 a, b, 35) umfassen, welche sich von einer Stützplatte zur anderen erstrecken und durch gespannte Faserrovings zum Übertragen der Zugkräfte verbunden sind.

7. Lenkeinheit nach einem der vorstehenden Ansprüche,
wobei ein linker (31a) und ein rechter (31 b) oberer feststehender Befestigungspunkt bereitgestellt ist und diese oberen feststehenden Befestigungspunkte und das erste Befestigungsmittel Stäbe sind, welche sich von einer ersten Stützplatte (100) zu einer zweiten Stützplatte (110), welche parallel zur ersten Stützplatte angeordnet ist, erstrecken und wobei die zylindrischen Stäbe durch gespannte Rovinge verbunden sind, welche wenigstens teilweise um die Stäbe gewickelt sind und welche umfassen
- ein erstes Faserroving (62, 63), welches sich von dem Stab für den linken zweiten feststehenden Befestigungspunkt zu dem Stab des ersten Befestigungsmittels erstreckt,
- ein zweites Faserroving (62, 63), welches sich von dem Stab für den rechten zweiten feststehenden Befestigungspunkt zu dem Stab des ersten Befestigungsmittels erstreckt,
- ein drittes Faserroving (60), welches sich von einem Kraftangriffspunkt für die bewegbaren Befestigungspunkte bis zu dem Stab des ersten Befestigungsmittels erstreckt,
zum Übertragen der Zugkräfte.

8. Lenkeinheit nach einem der vorstehenden Ansprüche,
wobei wenigstens einer der bewegbaren Befestigungspunkte und/oder das erste Befestigungsmittel mittels einer Kraftmesszelle (32a, b) mit dem Gestell gekoppelt ist.

9. Lenkeinheit nach einem der vorstehenden Ansprüche,
wobei zusätzliche bewegbare Befestigungsmittel (40a-f) zum Steuern der Hubkraft des aerodynamischen Flügelelements bereitgestellt sind, welche an wenigstens eine Zugleine koppelbar sind, welche an dem aerodynamischen Flügelelement in einem Bereich zwischen seiner Vorderkante und seiner Hinterkante befestigt ist.

10. Lenkeinheit nach einem der vorstehenden Ansprüche,
wobei zusätzliche bewegbare Befestigungsmittel zum Steuern der Hubkraft des aerodynamischen Flügelelements ein linkes bewegbares Befestigungsmittel und ein rechtes bewegbares Befestigungsmittel umfassen, welche an wenigstens eine Zugleine koppelbar sind, welche an einem linken Bereich und einen rechten Bereich des aerodynamischen Flügelelements befestigt sind bzw, in einem Bereich zwischen seiner Vorderkante und Hinterkante.

11. Lenkeinheit nach einem der vorstehenden Ansprüche,
**dadurch gekennzeichnet, dass** die Lenkeinheit umfasst: einen Energiespeicher, einen Sensor zum Erfassen der Orientierung und/oder der Drehgeschwindigkeit der Lenkeinheit, der Position der Lenkeinheit und/oder wenigstens eines Flugparameters der Lenkeinheit, und eine Steuerung (160) zum Steuern der Flugrichtung eines aerodynamischen Flügelelements, welche an der Lenkeinheit befestigt ist, wobei die Steuerung (160) mit dem (den) Sensor(en) und dem Energiespeicher verbunden ist und geeignet ist einen Aktuator zum Ändern der Flugrichtung des aerodynamischen Flügelelements basierend auf den Sensorsignalen zu steuern.

12. Aerodynamisches Windantriebssystem, umfassend einen aerodynamischen Flügel, welcher mittels mehrerer Zugleinen, die an dem Flügel an einer Vielzahl von Befestigungspunkten beabstandet entlang der Breite des Flügels befestigt sind, mit einer Lenkeinheit nach einem der vorstehenden Ansprüche verbunden ist, wobei
- mehrere der ganz linken Zugleinen (40a) vereinigt und mit dem linken bewegbaren Befestigungspunkt verbunden sind,
- mehrere der zentral-linken Zugleinen (41 a) vereint und mit dem linken feststehenden Befestigungspunkt verbunden sind.
- mehrere der zentral-rechten Zugleinen (41b) vereinigt und mit dem rechten feststehenden Befestigungspunkt verbunden sind und
- mehrere der ganz rechten Zugleinen (40b) vereinigt und mit dem rechten bewegbaren Befestigungspunkt verbunden sind.

13. Aerodynamisches Flügelantriebssystem nach dem vorstehenden Anspruch, wobei die Lenkeinheit zusätzliche bewegbare Befestigungsmittel zum Steuern der Hubkraft des aerodynamischen Flügelelements umfasst, welche mit wenigstens einem, bevorzugt mehreren Zughubkraft-Steuerungsleinen, die an dem aerodynamischen Flügelelement in einem Bereich zwischen der Vorderkante und der Hinterkante befestigt sind, gekoppelt sind,
wobei die zusätzlichen bewegbaren Befestigungsmittel zum Steuern der Hubkraft des aerodynamischen Flügelelements ein linkes bewegbares Befestigungsmittel und ein rechtes bewegbares Befestigungsmittel umfassen, welche an wenigstens eine Zugleine koppelbar sind, die an einem linken Bereich bzw. an einem rechten Bereich des aerodynamischen Flügelelements zwischen seiner Vorderkante und Hinterkante befestigt ist.

14. Ein Wasserfahrzeug, welches mittels eines Zugseils mit einer Steuerungseinheit eines Windantriebssystems nach einem der Ansprüche 1-11 verbunden ist.

## Revendications

1. Unité de pilotage pour un système de propulsion éolienne, l'unité de pilotage comprenant :
- un premier moyen de fixation fixe (35) pour fixer une première extrémité d'un câble de traction (43) dont la seconde extrémité est fixée à un dispositif ou un véhicule auquel une force de traction sera transférée,
- un second moyen de fixation (31a, b, 36a, b, 33, 34) pour fixer un nombre de lignes de traction (40a, b, 41a, b), dont la seconde extrémité est fixée à un élément d'aile aérodynamique (11a, 12a, 21),
- un cadre de support mécanique (100, 110) reliant le premier moyen de fixation au second moyen de fixation pour transférer une force de traction,
**caractérisée en ce que** le second moyen de fixation comprend :
- au moins un point de fixation fixe supérieur (31a, b),
- un point de fixation mobile gauche (36a),
- un point de fixation mobile droit (36b), et
- un moyen actionneur de pilotage (33, 34, 120, 130, 140a à c) pour faire varier la distance entre le point de fixation fixe supérieur et le point de fixation mobile gauche et pour faire varier la distance entre le point de fixation fixe supérieur et le point de fixation mobile droit.

2. Unité de pilotage selon la revendication précédente, dans laquelle le moyen actionneur de pilotage comprend un actionneur (120, 34) pour entraîner sélectivement une courroie (33) dans des directions alternatives, la première extrémité de la courroie fournissant le point de fixation mobile gauche et la seconde extrémité de la courroie fournissant le point de fixation mobile droit.

3. Unité de pilotage selon la revendication 1, dans laquelle le moyen actionneur de pilotage comprend un premier actionneur fixé au cadre de support (100, 110) et adapté pour faire varier la distance entre le point de fixation (31a, b) et le point de fixation mobile gauche (36a) et un second actionneur fixé au cadre de support et adapté pour faire varier la distance entre le point de fixation fixe supérieur et le point de fixation mobile droit (36b).

4. unité de pilotage selon l'une quelconque des revendications précédentes, dans laquelle le cadre de support comprend au moins deux plaques de support (100, 110) agencées à une distance l'une de l'autre et prenant en sandwich l'au moins un point de fixation fixe supérieur et le premier moyen de fixation.

5. Unité de pilotage selon l'une quelconque des revendications précédentes, dans laquelle les points d'incidence de charge du premier moyen de fixation fixe (35) et du second moyen de fixation (31a, b) sont reliés par des stratifils de tension en fibre (60, 61, 62, 63) pour transférer les forces de traction.

6. Unité de pilotage selon l'une quelconque des revendications précédentes, dans laquelle le cadre de support comprend au moins deux plaques de support (100, 110) agencées à une distance l'une de l'autre et le premier moyen de fixation fixe et le second moyen de fixation fixe comprennent des barres rigides (31a, b, 35) s'étendant d'une des plaques de support à l'autre et étant reliées par des stratifils de tension en fibre pour transférer les forces de traction.

7. Unité de pilotage selon l'une quelconque des revendications précédentes, dans laquelle des points de fixation fixes supérieurs gauche (31a) et droit (31b) sont prévus et ces points de fixation fixes supérieurs et le premier moyen de fixation sont des barres s'étendant d'une première plaque de support (100) à une seconde plaque de support (110) agencée parallèlement à la première plaque de support et dans laquelle les barres cylindriques sont reliées par des stratifils de tension qui sont au moins partiellement enroulés autour des barres et qui comprennent :
- un premier stratifil en fibre (62, 63) s'étendant de la barre pour le second point de fixation fixe gauche à la barre du premier moyen de fixation,
- un deuxième stratifil en fibre (62, 63) s'étendant de la barre pour le second point de fixation fixe droit à la barre du premier moyen de fixation,
- un troisième stratifil en fibre (60) s'étendant d'un point d'incidence de charge pour les points de fixation mobiles à la barre du premier moyen de fixation pour transférer les forces de traction.

8. Unité de pilotage selon l'une quelconque des revendications précédentes, dans laquelle au moins un des points de fixation mobiles et/ou le premier moyen de fixation est couplé avec le cadre de support par l'intermédiaire d'une cellule de mesure de charge (32a, b).

9. Unité de pilotage selon l'une quelconque des revendications précédentes, dans laquelle des moyens de fixation mobiles supplémentaires (40a à f) pour commander la force de levage de l'élément d'aile aérodynamique sont prévus qui doivent être couplés avec au moins une ligne de traction fixée à l'élément d'aile aérodynamique dans une région entre son bord d'attaque et son bord de fuite.

10. Unité de pilotage selon la revendication précédente, dans laquelle les moyens de fixation mobiles supplémentaires pour commander la force de levage de l'élément d'aile aérodynamique comprennent un moyen de fixation mobile gauche et un moyen de fixation mobile droit qui doivent être couplés avec au moins une ligne de traction fixée à une région gauche et une région droite de l'élément d'aile aérodynamique, respectivement, dans une région entre son bord d'attaque et son bord de fuite.

11. Unité de pilotage selon l'une quelconque des revendications précédentes, **caractérisée en ce que** l'unité de pilotage comprend un stockage d'énergie, un capteur pour détecter l'orientation et/ou la vitesse angulaire de virage de l'unité de pilotage, la position de l'unité de pilotage et/ou au moins un paramètre de vol de l'unité de pilotage, et un dispositif de commande (160) pour commander la direction de vol d'un élément d'aile aérodynamique fixé à l'unité de pilotage, le dispositif de commande (160) étant connecté au ou aux capteur(s) et au stockage d'énergie et étant capable de commander un actionneur pour changer la direction de vol de l'élément d'aile aérodynamique sur la base des signaux de capteur.

12. Système de propulsion éolienne aérodynamique, comprenant une aile aérodynamique reliée par l'intermédiaire d'un nombre de lignes de traction fixées à l'aile à une pluralité de points de fixation éloignés le long de la largeur de l'aile à une unité de pilotage selon l'une quelconque des revendications précédentes, dans lequel :
- un nombre de lignes de traction les plus à gauche (40a) sont associées et reliées au point de fixation mobile gauche,
- un nombre de lignes de traction gauches centrales (41a) sont associées et reliées au point de fixation fixe gauche,
- un nombre de lignes de traction droites centrales (41b) sont associées et reliées au point de fixation fixe droit, et
- un nombre de lignes de traction les plus à droite (40b) sont associées et reliées au point de fixation mobile droit.

13. Système de propulsion éolienne aérodynamique selon la revendication précédente, dans lequel l'unité de pilotage comprend des moyens de fixation mobiles supplémentaires pour commander la force de levage de l'élément d'aile aérodynamique qui sont couplés avec au moins une, de préférence un nombre de, lignes de commande de force de levage de traction fixées à l'élément d'aile aérodynamique dans une région entre son bord d'attaque et son bord de fuite, dans lequel les moyens de fixation mobiles supplémentaires pour commander la force de levage de l'élément d'aile aérodynamique comprennent un moyen de fixation mobile gauche et un moyen de fixation mobile droit qui doivent être couplés avec au moins une ligne de traction fixée à une région gauche et une région droite de l'élément d'aile aérodynamique, respectivement, dans une région entre son bord d'attaque et son bord de fuite.

14. Véhicule nautique relié par l'intermédiaire d'un câble de traction à une unité de pilotage d'un système de propulsion éolienne selon l'une des revendications 1 à 11.
